# EUROPEAN PATENT APPLICATION

(11) **EP 4 420 813 A1**
(43) Date of publication of application: **28.08.2024**
(21) Application number: 24158981.1
(22) Date of filing: 21.02.2024
(51) Int. Cl.: B23B 27/00, B23B 27/04, B23B 27/14, B23B 27/16, B23B 29/04

(54) **BODY OF CUTTING TOOL AND CUTTING INSERT**

(30) Priority: 22.02.2023 JP 2023026220
(71) Applicant: Tungaloy Corporation, Iwaki-shi, Fukushima 970-1144 (JP)
(72) Inventor: SUZUKI, Yusuke, Fukushima, 9701144 (JP)
(74) Representative: Vossius & Partner Patentanwälte Rechtsanwälte mbB

(57) **Abstract**

A body of a cutting tool and a cutting insert which can further improve support stiffness of the cutting insert are provided.

A body of a cutting tool includes an insert seat provided on a leading end part of the body, a screw hole with which a fastening screw is screwed, a deep seat portion provided at a deep part in the insert seat in an axial direction of the screw hole, a receiving portion receiving a contact portion of the cutting insert, a wall portion having a base-end side rotation suppression portion which stops rotation of the cutting insert, and a shallow seat portion, the depth of a seat thereof being shallower than a part with the receiving portion, wherein the base-end side rotation suppression portion is positioned not to overlap the deep seat portion when viewed along a screw-hole axis.

## Description

### Background

### Field

The present invention relates to a body of a cutting tool and a cutting insert.

### Description of Related Art

A cutting tool used for grooving in a hole bottom surface has specific problems of lowering an ejection performance of chips, depending on a depth of the grooving in the hole bottom surface, and of interfering of a material to be cut with a cutting insert when a deflection amount of a body and the like during cutting becomes larger, resulting in damaging a cutting edge, and for these problems, various approaches for improvement to address the problems have been proposed (see Japanese Translation of PCT Application No. 2010-535638, Japanese Patent No. 6976522, for example).

### Summary

However, though improvements have been made for the cutting tool as above, when an attention is paid, for instance, to a thickness, support stiffness of the body of the cutting tool, it is conceivable that there is still a room for more improvement. For example, if the stiffness of the body is not sufficient, there may be an influence such as occurrence of chattering particularly during machining such as inner-diameter machining.

Thus, an object of the present invention is to provide a body of a cutting tool and a cutting insert that can further improve support stiffness of the cutting insert.

In order to solve the problems as above, the inventor continued examinations while paying an attention to structures of a cutting insert and a body which supports the same. In a case where the cutting insert is mounted from a lateral side on an insert seat of the body on a leading-end part side thereof, and is fastened by a fastening screw, and moreover is cut in a vertical direction, with a cutting edge being placed in contact with a hole bottom surface of a rotating material to be cut, and if the cutting edge is assumed as a point of effort and the fastening screw (a screw hole for insertion thereof) is a point of fulcrum, a base end part on an opposite side to the cutting edge is a point of load, and how to receive by the body a reaction force acting from a vicinity of this base end part is important in suppressing a deflection amount of the cutting edge during cutting. From this viewpoint, elongation of a distance from the point of fulcrum to the point of load can be considered to be one of means that can be employed for the sake of suppressing the deflection of the point of effort (cutting edge) more easily but, the body (the insert seat thereof) also has to be elongated in accordance with a length of the cutting insert, and as a result, even if the reaction force acting from the vicinity of the base end part is received adequately, the body itself, i.e., an essential component, is deflected, and the influence of the entire deflection becomes too large. As the result of the examination with these various problems in mind, the inventor has arrived at a finding which led to solution of the problems.

The present invention has been made on the basis of the finding as above, and an aspect thereof is a body of a cutting tool, including
an insert seat which is for mounting thereon a cutting insert and which is provided at a leading end part of the body,
a screw hole with which a fastening screw for fastening the cutting insert mounted on the insert seat is screwed,
a deep seat portion provided at a deep part in the insert seat in an axial direction of the screw hole,
a receiving portion which is a part for receiving a contact portion at a position opposed to the contact portion formed on a bottom part facing the insert seat of the cutting insert in the deep seat portion,
a wall portion which has at least two base-end side rotation suppression portions that are formed of an inner wall surface constituting the insert seat, are in contact with a peripheral side part of the cutting insert, and moreover that stop rotation of the cutting insert around an axis of the screw hole, and
a shallow seat portion which is formed on a part including the base-end side rotation suppression portions in the insert seat and which has a depth shallower than the part having the receiving portion, wherein
the base-end side rotation suppression portions are positioned not to overlap the deep seat portion, when viewed along the axis of the screw hole.

According to the body of the cutting insert in the aspect as above, since the shallow seat portion whose depth of the seat is shallower than the part where the receiving portion is provided in the insert seat is formed on a part on the opposite side to the cutting edge (namely, closer to the base end part of the body), the thickness of the body in the part can be ensured and increased. According to this, the body stiffness or particularly the body stiffness in the part on the opposite side to the cutting edge in the cutting insert can be improved without changing a size of a body periphery and thus, the chattering which may occur during machining such as inner-diameter machining can be suppressed.

In the body of the cutting tool as above, the deep seat portion may include a surface perpendicular to the axis of the screw hole.

In the body of the cutting tool as above, an engagement projected part having a shape for engaging with a recessed part on the bottom part of the cutting insert may be formed.

The engagement projected part of the body of the cutting tool as above may be formed having a shape protruding from the deep seat portion.

The engagement projected part of the body of the cutting tool as above may be formed having a triangular or a trapezoidal shape on a cross section perpendicular to a central axis X extending in the longitudinal direction of the body and have a leading-end side rotation suppression portion which stops rotation of the cutting insert around the axis of the screw hole by being in touch with a part of the cutting-insert recessed part.

In the body of the cutting tool as above, the leading-end side rotation stopping portion may be formed on a leading end part of the body.

In the body of the cutting tool as above, the shallow seat portion may be formed so as to become gradually shallower while being inclined as the shallow seat portion nears the base end part of the body.

In the body of the cutting tool as above, the shallow seat portion may be formed so as to become shallower in steps as the shallow seat portion nears the base end part of the body.

In the body of the cutting tool as above, the receiving portions may be provided in plurality.

In the body of the cutting tool as above, the receiving portion may be provided at least on both a region nearer to the leading end part than the screw hole and a region nearer to the base end part than the screw hole.

In the body of the cutting tool as above, it may be so configured that a flat surface is formed on a peripheral surface on the base-end part side, and the deep seat portion is inclined with respect to a Y-axis perpendicular to the flat surface or with respect to a Z-axis perpendicular to the Y-axis and also perpendicular to a central axis X extending in the longitudinal direction of the body.

In the body of the cutting tool as above, the deep seat portion may be inclined with respect to a first reference surface that is parallel to a rotating direction of a material to be cut with respect to the cutting edge during a cutting process and that includes the central axis X extending in the longitudinal direction of the body.

In the body of the cutting tool as above, the body may include a leading-end side rotation suppression portion which stops rotation of the cutting insert around the axis of the screw hole by being in touch with a part of the recessed part of the cutting insert, an engagement projected part having a shape for engaging with a recessed part on the bottom part of the cutting insert may be formed, and the deep seat portion may be inclined in a direction in which a thickness thereof in a vertical direction increases from a leading-end side rotation suppression portion of the engagement projected part to a part located in a lower part in a vertical direction of the leading-end side rotation suppression portion in a peripheral surface of the body, when viewed from the leading end part along the central axis X.

Another aspect of the present invention is a cutting insert which is removably mounted on the body as above, the cutting insert including
a cutting edge provided on a leading end part of the cutting insert, and
a screw hole through which a screw part of a fastening screw passes, in which
an axis of the screw hole and a peripheral side part of the cutting insert are parallel, and
when viewed along a central axis X extending in the longitudinal direction of the cutting insert, the cutting edge forms any angle in one direction with respect to the axis of the screw hole.

In the cutting tool as above, the cutting edge may be perpendicular to a first reference surface that is parallel to a rotating direction of a material to be cut with respect to the cutting edge during a cutting process and that includes a central axis X extending in a longitudinal direction of the body, when viewed from the leading end part along the central axis X in a state in which the cutting insert is mounted on the body.

In the cutting tool as above, a top part located on an opposite side to the bottom part may have a circular-arc shape on a cross section perpendicular to the central axis X.

Still another aspect of the present invention is a cutting insert removably mounted on an insert seat of the body, the cutting insert including
a cutting edge which is provided on a leading end part of the cutting insert,
a screw hole through which a screw part of a fastening screw for fastening the cutting insert to the insert seat passes,
a contact portion formed on a bottom part facing the insert seat of the cutting insert and in contact with the insert seat,
a top part located on an opposite side to the bottom part and having a circular-arc shaped cross section, and
a base end part thinner than a maximum thickness of the bottom part and the top part, in which
a touching portion in touch with an inner wall surface constituting the insert seat is provided on a part in the base end part in a peripheral side part of the cutting insert.

### Brief Description of Drawings

FIG. 1 is a perspective view illustrating a leading-end part side of a body of a cutting tool and a cutting insert in an Embodiment of the present invention;
FIG. 2 is a perspective view illustrating the leading-end part side of the body;
FIG. 3 is a view illustrating the leading-end part side of the body when viewed toward the insert seat;
FIG. 4 is a view illustrating a state in which the cutting insert is mounted on the insert seat of the body shown in FIG. 3;
FIG. 5 is a view of the cutting tool viewed from the leading-end part side along a central axis of the body;
FIG. 6 is a view for explaining a point of effort, a point of fulcrum, a point of load of a force acting on the cutting insert in a cutting process;
FIG. 7 is a view of the cutting tool shown in FIG. 4, viewed from a lower part in FIG. 4 and in parallel to the deep seat portion of the insert seat;
FIG. 8 is a perspective view for explaining a contact portion formed on a bottom part of the cutting insert;
FIG. 9 is a perspective view for explaining a receiving portion formed on the insert seat of the body;
FIG. 10A is a schematic diagram for explaining a thickness of the body and FIG. 10B is a diagram of a leading-end part side of the body;
FIG. 11A is a perspective view of the cutting insert viewed from the bottom part side and FIG. 11B is a perspective view of the leading-end part side of the body;
FIG. 12 is a perspective view illustrating the entire cutting tool;
FIG. 13 is a view of the body viewed from the leading-end part side along the central axis thereof;
FIG. 14 is a view illustrating the insert seat of the body when viewed along a Y-axis;
FIG. 15 is a view illustrating the insert seat of the body when viewed along an axis of the screw hole;
FIG. 16 is a perspective view illustrating a shape example of an engagement projected part and a wall portion of the insert seat;
FIG. 17 is a view illustrating the engagement projected part shown in FIG. 16 and its periphery in an enlarged manner;
FIG. 18 is a view illustrating the wall portion shown in FIG. 16 and its periphery in an enlarged manner;
FIG. 19 is a perspective view illustrating a periphery of the wall portion on the base-end part side in the insert seat in an enlarged manner;
FIG. 20 is a view of the cutting insert viewed from a top part side (cylindrical peripheral surface side) along the axis of the screw hole;
FIG. 21 is a view of the cutting insert viewed from the leading-end part side;
FIG. 22 is a view of the cutting insert viewed from the bottom part side along the axis of the screw hole;
FIG. 23 is a view of the cutting tool shown in FIG. 20, viewed from above in FIG. 20;
FIG. 24 is a view of the cutting tool shown in FIG. 20, viewed from below in FIG. 20; and
FIG. 25 is a perspective view of a side in which the top part of the cutting insert is located when viewed from the leading-end part side.

### Detailed Description

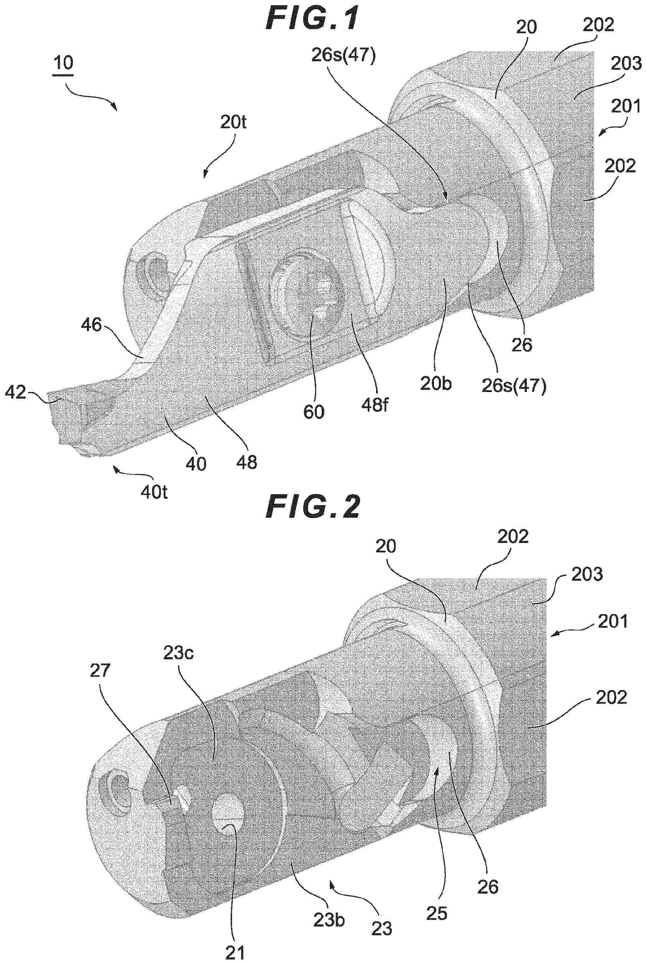

Hereinafter, preferred embodiments of a body of a cutting tool and a cutting insert according to the present invention will be explained in detail with reference to the drawings (see FIG. 1 to FIG. 25).

A cutting tool 10 which will be explained below is configured as a tool suitable for machining such as grooving in a hole bottom surface of a material to be cut (work) 100 and is constituted by a body 20 and a cutting insert 40 mounted on an insert seat 22 of the body 20 (see FIG. 1 and the like).

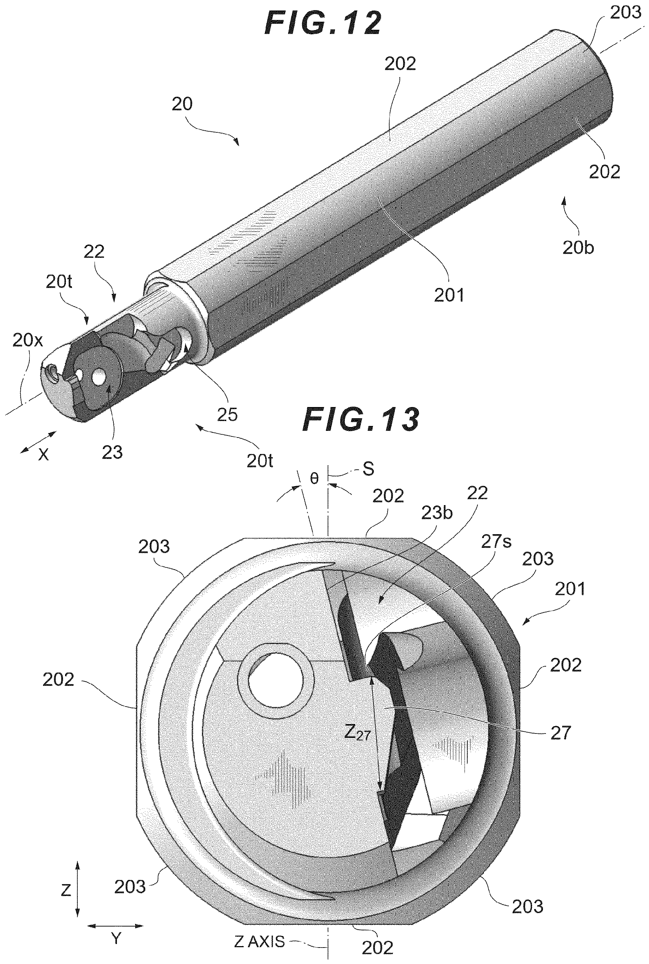

Here, in this Description, for convenience of explanation, three directions or axes are defined as follows. Those defined here are directions (or axes) of the cutting tool 10 single body. First, an axis parallel to a central axis 20x along a longitudinal direction of the body 20 is assumed to be an X-axis (see FIG. 12), and a Y-axis perpendicular to the X-axis and a Z-axis perpendicular to the X-axis and the Y-axis are defined (see FIG. 13). The Y-axis is perpendicular to a pair of flat surfaces 202 in four flat surfaces (constituted by a pair of parallel surfaces and another pair of surfaces perpendicular to them) 202 formed on a base-end part side peripheral surface 201 of the body 20 (see FIG. 13 and the like), and the Z-axis is perpendicular to another pair of the flat surfaces 202 (see FIG. 13 and the like). In the base-end part side peripheral surface 201, a part excluding the flat surfaces 202 is a cylindrical peripheral surface 203.

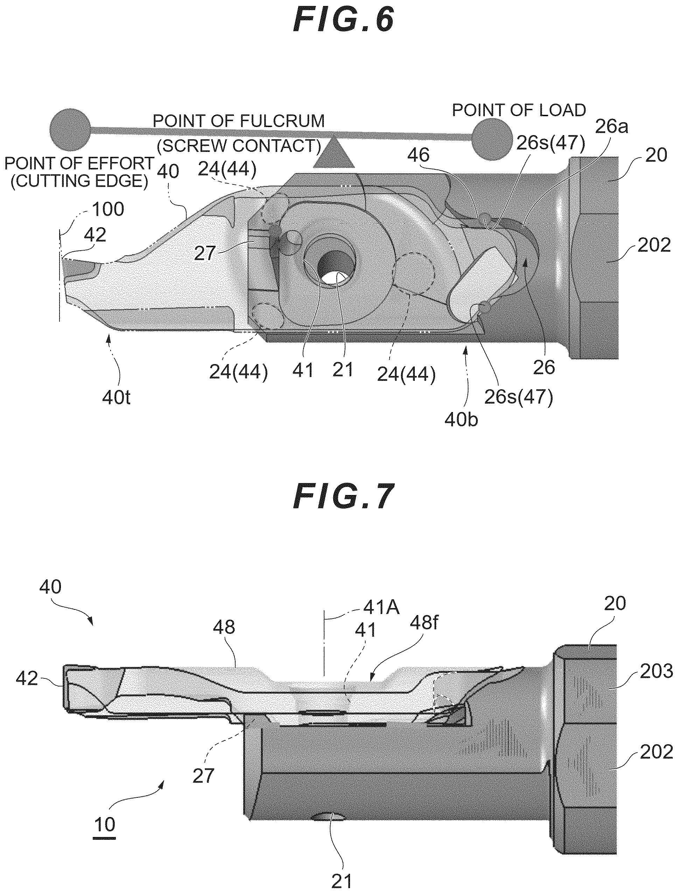

The cutting tool 10 of this Embodiment was improved in a configuration thereof with a major focus on improvement of support stiffness of the cutting insert 40 by the body 20. That is, when a major component-force direction of a cutting force acting when a cutting edge 42 of the cutting insert 40 is applied to the hole bottom surface of the rotating material to be cut 100 is considered (see FIG. 6), by assuming that the cutting edge 42 to which an external force acts is the point of effort and (a screw hole 21 through which) a fastening screw 60 (is inserted) is the point of fulcrum related to the rotation of the cutting insert 40 with respect to the body 20, a peripheral side part 46 of a base end part 40b on a side opposite to the cutting edge 42 is the point of load, and a reaction force operates to the body 20 from this point of load which is a rotation stopper of the cutting insert 40 with respect to the body 20. In this case, in a point that a deflection amount of the cutting edge 42 in cutting is suppressed, it is important how to receive the reaction force operating from the vicinity of the base end part 40b of the cutting insert 40 by the body 20. In this viewpoint, elongation of a distance from the point of fulcrum to the point of load is one of measures that can be employed in the point that the deflection at the point of effort (cutting edge 42) can be easily suppressed, but then, the body 20 and the insert seat 22 thereof also need to be elongated in accordance with the length of the cutting insert 40, and in that case, even if the reaction force operating from the vicinity of the base end part 40b is received favorably, the body 20 itself, which is important, is deflected, and an influence of the entire deflection might become too significant. The cutting tool 10 of this Embodiment is configured so that the problems as above can be solved and is based on an idea that the cutting insert 40 can be elongated, and the stiffness of the body 20 as cantilever is improved. The detailed structure thereof is as will be described below.

### Body

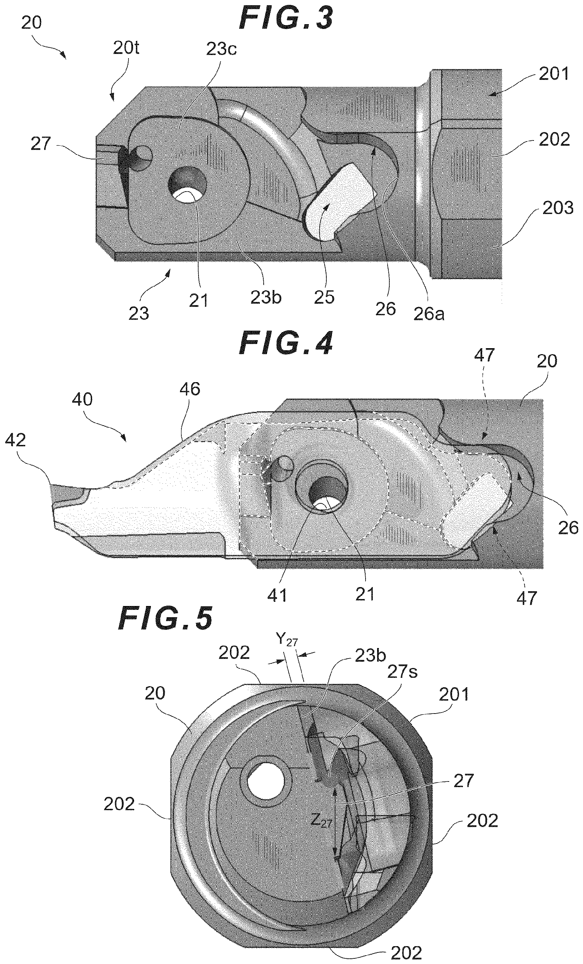

On a leading end part 20t of the body 20, the insert seat 22 on which the cutting insert 40 is mounted is provided (see FIG. 3, FIG. 4 and the like). In the insert seat 22, the screw hole 21, a deep seat portion 23, a shallow seat portion 25, a wall portion 26, an engagement projected part 27 and the like are formed (see FIG. 2 and the like).

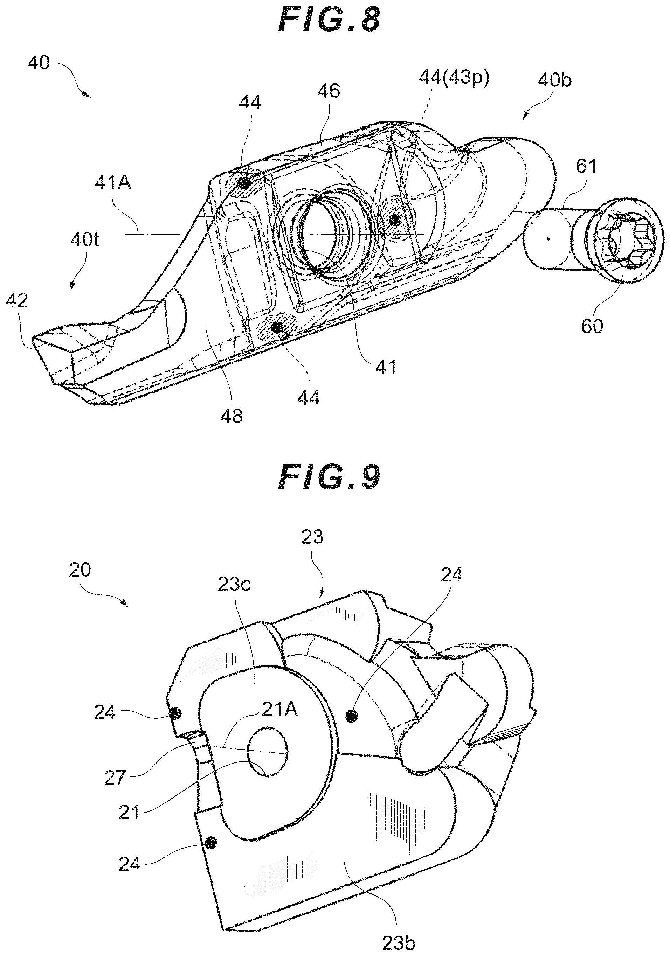

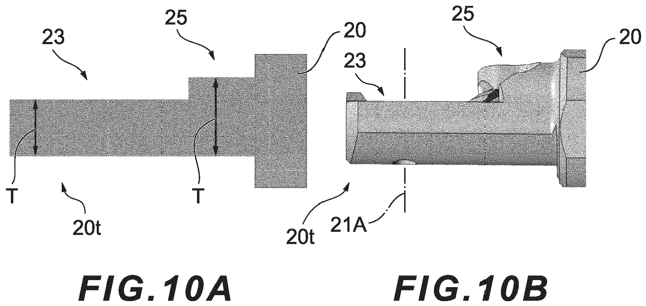

The screw hole 21 is a hole in which the fastening screw 60 for fastening the cutting insert 40 to the body 20 is screwed (see FIG. 2 and the like). In this Embodiment, an axis 21A of the screw hole 21 is perpendicular to the deep seat portion 23 (or a bottom surface 23b thereof) of the insert seat 22 (See FIG. 8, FIG. 10B and the like).

The deep seat portion 23 is a seat portion provided on a deep part in an axis 21A direction of the screw hole 21 in the insert seat 22. In the deep seat portion 23, the bottom surface 23b perpendicular to the axis 21A of the screw hole 21 is formed. The bottom surface 23b includes a flat surface but does not have to be flush. In this Embodiment, a counter boring 23c is provided in the periphery of the screw hole 21 so that the counter boring 23c is deeper than the periphery (see FIG. 2, FIG. 9, FIG. 14, FIG. 19 and the like). The counter boring 23c is the deepest part along the axis 21A direction of the screw hole 21 in the insert seat 22.

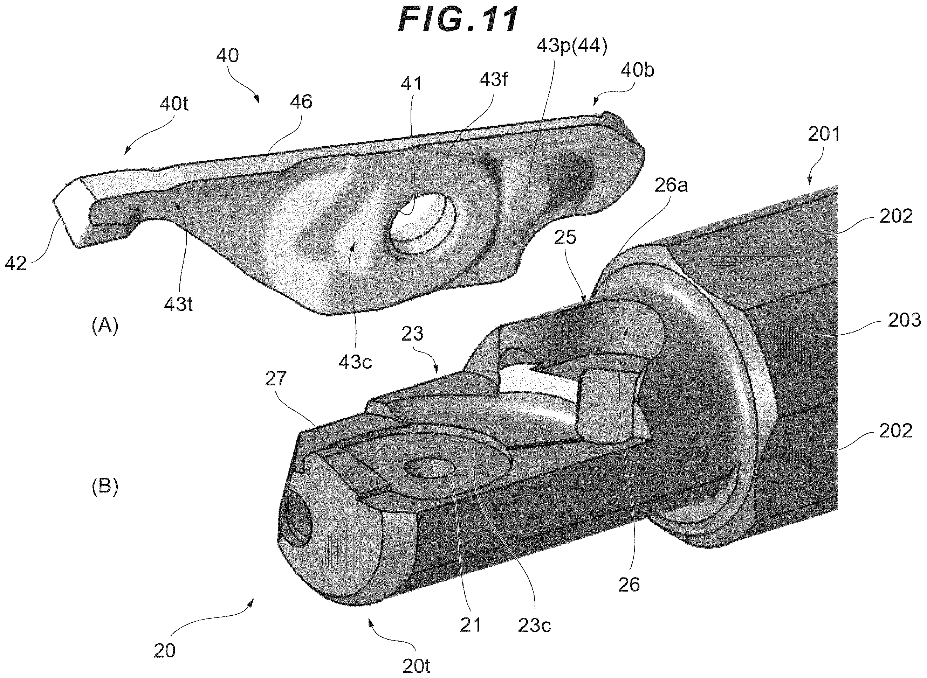

A receiving portion 24 is a part which directly supports the cutting insert 40 in contact with a bottom part 43 of the cutting insert 40 mounted on the insert seat 22. The receiving portion 24 may be provided so as to be in contact with the bottom part 43 of the cutting insert 40 on the whole surface or may be provided so as to be in partial contact with a part of the bottom part 43. In this Embodiment, it is configured such that, in plurality of, or three regions, for example, opposed to a plurality of, or three regions (referred to as a "contact portions 44", in this description), for example, in the bottom part 43 of the cutting insert 40 receive the respective contact portions 44, and each of these three regions is caused to function as the receiving portions 24 (see FIG. 11A, FIG. 11B and the like). These receiving portions 24 are disposed both in a region closer to the leading end part 20t than the screw hole 21 and a region closer to a base end part 20b than the screw hole 21. In the body 20 of this Embodiment, two of these three receiving portions 24 are located closer to the leading end part 20t than the screw hole 21, and the remaining one is located closer to the base end part 20b than the screw hole 21 (see FIG. 6 to FIG. 9). Moreover, all of these receiving portions 24 are provided not in the shallow seat portion 25, which will be described later, but in the deep seat portion 23 (see FIG. 6 and the like). It is to be noted that the deep seat portion 23 has parts with different depths, that is, surfaces in three steps in the depth direction in this Embodiment, and only one of them is called the shallow seat portion 25, while the other two are collectively called the deep seat portions 23.

The shallow seat portion 25 is a part provided on a part closer to the base end part 20b than the deep seat portion 23 in the insert seat 22. The shallow seat portion 25 is formed such that a depth in the axis 21A direction of the screw hole 21 is smaller than that of the deep seat portion 23 (see FIG. 10A, FIG. 10B, FIG. 11A, FIG. 11B and the like). The body 20 of this Embodiment in which a part of the insert seat 22 is formed so as to be the shallow seat portion 25 whose seat surface is shallow as above has a thickness of the part of the insert seat 22 (part closer to the base end part 20b) larger than the part closer to the leading end part 20t for that portion (see the part indicated by a sign T with a two-way arrow in FIG. 10A). In other words, a volume to be removed when the insert seat 22 is formed by removing machining in a manufacture process of the body 20 is reduced, and a sectional area of the body 20 is increased. By forming the thickness of the insert seat 22 so as to become larger as it goes toward the base end part 20b, whereby the sectional area of the body 20 is made larger for that portion, the stiffness as a cantilever of the body 20 is improved, and deflection can be made difficult to occur. The shallow seat portion 25 may be formed so that it becomes gradually shallower while being inclined as it gets closer to the base end part 20b of the body 20 or may be formed so as to become shallower in steps as it gets closer to the base end part 20b of the body 20.

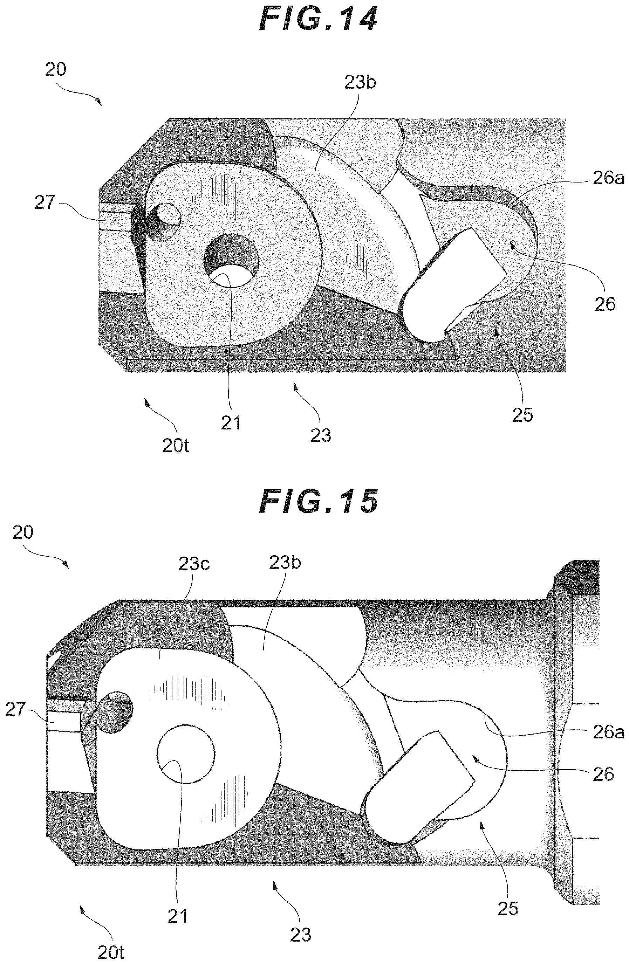

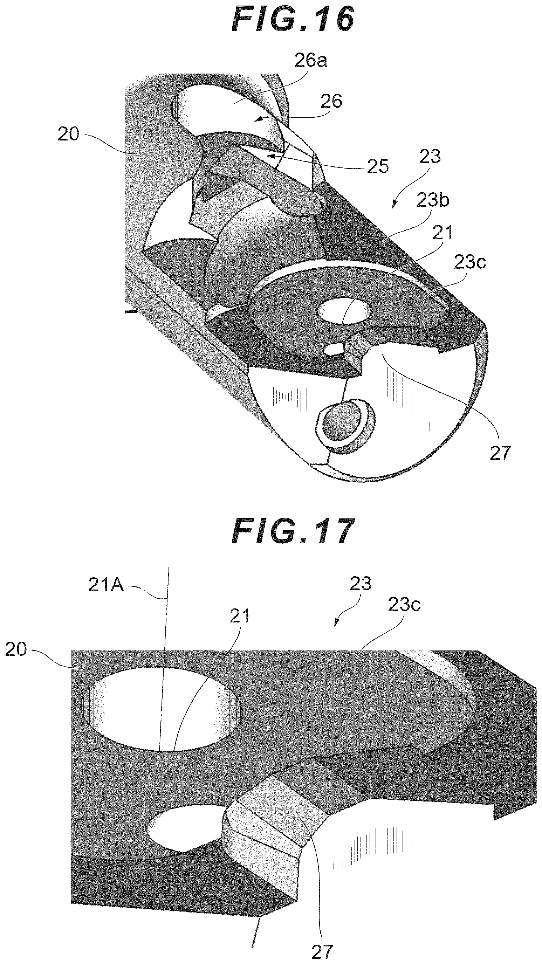

The wall portion 26 is a part constituted by an inner wall surface 26a rising in the screw axis 21A direction from the insert seat 22 (see FIG. 15, FIG. 16 and the like). In the case of this Embodiment in which the insert seat 22 is formed on the body 20 having a substantially circular section, most of the wall portion 26 is formed in the periphery of the shallow seat portion 25 (see FIG. 6, FIG. 7 and the like). The wall portion 26 is formed in accordance with the shape of the base end part 40b of the cutting insert 40, and the base end part 40b of the cutting insert 40 can be accommodated in a region surrounded by the inner wall surface 26a (see FIG. 6, FIG. 7 and the like). Moreover, the inner wall surface 26a is formed so as to be in line contact or point contact with the peripheral side part 46 of the cutting insert 40 at two spots (see FIG. 6 and the like). In this Description, these parts provided at the two spots in the inner wall surface 26a are referred to as "base-end side rotation suppression portions", and they are indicated by small circle marks with a sign 26s in FIG. 6.

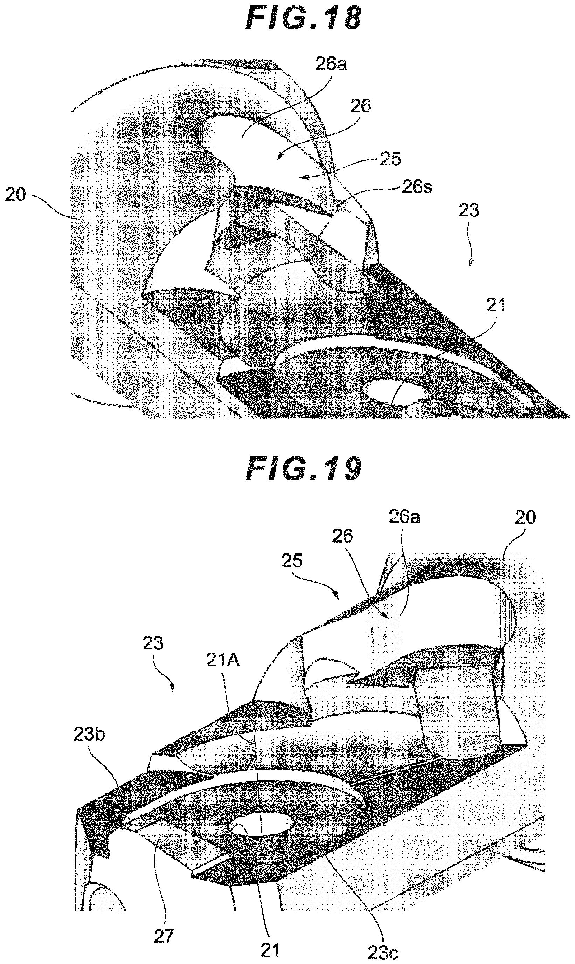

The base-end side rotation suppression portion 26s functions to limit rotation of the cutting insert 40 around the axis 21A of the screw hole 21 by being brought into contact with the peripheral side part 46 of the cutting insert 40 as described above and also functions as positioning to suppress movement of the cutting insert 40 to the base end part 20b side (see FIG. 6 and the like). In this Embodiment, the two base-end side rotation suppression portions 26s are located so as to sandwich the base end part 40b of the cutting insert 40. Among them, the base-end side rotation suppression portion 26s located in an upper part in FIG. 6 in particular acts to receive a reaction force acting from the base end part 40b on the side opposite to the cutting edge 42 when an external force acts on the cutting insert 40 from the cutting edge 42 in the machining. When the reaction force is received by the base-end side rotation suppression portion 26s as above, the body 20 of this Embodiment, having the shape whose thickness is increased as described above, can resist the reaction force while suppressing the deflection. When viewed along the axis 21A of the screw hole 21 or when viewed along the Y-axis, the base-end side rotation suppression portions 26s at these two spots are located at positions not overlapping the deep seat portion 23. In other words, it can be considered that the aforementioned shallow seat portion 25 is formed on the part including these base-end side rotation suppression portions 26s. Moreover, the base-end side rotation suppression portion 26s located in a lower part in FIG. 6 is located on a part on an edge of the inner wall surface 26a of the wall portion 26 and is provided so as to be in point contact with the peripheral side part 46 of the cutting insert 40 (see FIG. 18).

The engagement projected part 27 is formed so as to protrude from the bottom surface 23b of the deep seat portion 23 and to engage with a part (specifically, a recessed part 43c of the bottom part 43 of the cutting insert 40, which will be described later) of the cutting insert 40 mounted on the insert seat 22 in the leading end part 20t of the body 20 (see FIG. 11A to FIG. 17 and the like). The engagement projected part 27 of this Embodiment is formed having a triangular shape or a trapezoidal shape on a YZ section (section perpendicular to the X-axis) (see FIG. 13, FIG. 17 and the like), but its specific shape is not particularly limited. Moreover, the engagement projected part 27 is formed so as to be in point contact or line contact with a part of the recessed part 43c of the cutting insert 40. In this Description, on the engagement projected part 27, the part in touch with a part of the recessed part 43c of the cutting insert 40 is referred to as the "leading-end side rotation suppression portion" and is indicated by a small circle mark with a sign 27s in FIG. 5.

The leading-end side rotation suppression portion 27s functions to stop rotation of the cutting insert 40 around the axis 21A of the screw hole 21 by being in touch with a part of the recessed part 43c of the cutting insert 40 as described above (FIG. 5 and the like). Here, it is expressed as the "rotation stop", but when explained in more detail, this leading-end side rotation suppression portion 27s functions to assist a force for supporting the cutting insert 40 as a point of fulcrum (expressed with the meaning as a support point related to the rotation of the cutting insert 40 with respect to the body 20) in the vicinity of the screw hole 21 (see FIG. 6). That is, in the machining, when the external force acts on the cutting insert 40 from the cutting edge 42, by increasing a touching region between the body 20 and the cutting insert 40 in the vicinity of the screw axis 21A, a function of increasing the support force at the point of fulcrum (screw axis 21A) (distributing the reaction force at the point of fulcrum to a plurality of spots) is performed by this leading-end side rotation suppression portion 27s.

A height Y₂₇ of the leading-end side rotation suppression portion 27s from the deep seat portion 23 (in other words, a distance between the leading-end side rotation suppression portion 27s and the bottom surface 23b of the deep seat portion 23 in the screw axis 21A direction) is preferably as low (small) as possible (see FIG. 5 and the like). Even if the force acting on the leading-end side rotation suppression portion 27s is the same, the higher (larger) the height Y₂₇ is, the larger the force acting so as to deform the engagement projected part 27. Therefore, from the viewpoint of supporting the cutting insert 40 in the leading-end side rotation suppression portion 27s while suppressing the deformation of the engagement projected part 27, it is preferable that the leading-end side rotation suppression portion 27s is as close to the bottom surface 23b (that is, the height Y₂₇ is small) as possible.

In the body 20 of the cutting tool as described above, the deep seat portion 23 is in a state inclined in a predetermined range (angle θ) when viewed from the leading end part 20t along the central axis 20x (see FIG. 13). By explaining specifically, the deep seat portion 23 is inclined by the angle θ with respect to the Z-axis. A direction of the inclination of the deep seat portion 23 is a counterclockwise direction in FIG. 13. This direction matches a direction in which a thickness in a vertical direction increases from the leading-end side rotation suppression portion 27s in the engagement projected part 27 (in other words, a thickness in the vertical direction from the leading-end side rotation suppression portion 27s to a part located immediately below the leading-end side rotation suppression portion 27s in the peripheral surface of the body 20 along the Z-axis direction, indicated by a sign Z₂₇ in FIG. 5) (see FIG. 5, FIG. 13). When the thickness Z₂₇ immediately below the leading-end side rotation suppression portion 27s increases, a support volume in the major component-force direction (the Z-axis direction in the case of this example) in the engagement projected part 27 increases, and the support stiffness is improved. According to this, while the deformation of the engagement projected part 27 is further suppressed, the cutting insert 40 can be supported in the leading-end side rotation suppression portion 27s. It is θ = 14° in this Embodiment, but the angle may be further larger. From the viewpoint of the support stiffness in the engagement projected part 27, it may be θ = 27°, and θ is preferably an angle substantially within a range of 14 to 27°. It is to be noted that, in the body 20 as above, by assuming a surface parallel to the rotating direction of the material to be cut 100 (in the case of this Embodiment, it is the same as the Z-axis direction) with respect to the cutting edge 42 in the cutting process and including the central axis 20x of the body 20 (it is referred to as a "first reference surface" in this Description and is indicated by a sign S in FIG. 13), it can be explained that the deep seat portion 23 is inclined by the predetermined angle θ with respect to this first reference surface S (see FIG. 5, FIG. 13).

### Cutting Insert

The cutting insert 40 includes a screw hole 41, the cutting edge 42, the bottom part 43, the recessed part 43c, the contact portion 44, the peripheral side part 46, a touching portion 47, a top part 48 and the like and is formed removably on the insert seat 22 of the body 20 as above (see FIG. 8, FIG. 11A, FIG. 11B, FIG. 20 to FIG. 25 and the like). The cutting insert 40 is molded by compressing/molding a powder body and sintering it, for example.

The screw hole 41 is provided so that a screw part 61 of the fastening screw 60 passes along a screw axis 41A of the screw hole 41 (see FIG. 8 and the like).

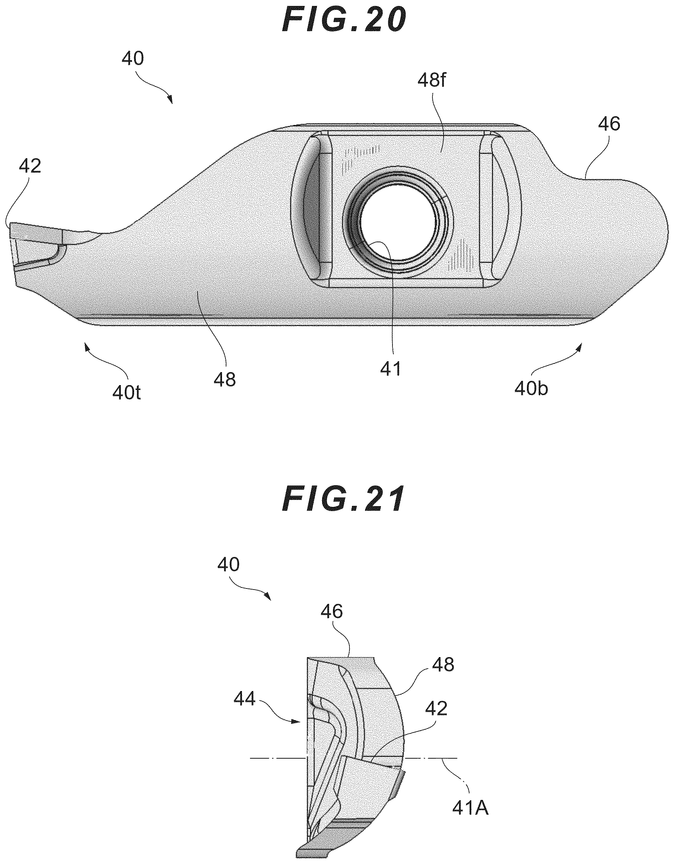

The cutting edge 42 is formed on a leading end part 40t of the cutting insert 40 (see FIG. 20 and the like). In the cutting insert 40 of this Embodiment, this cutting edge 42 is formed in a state inclined in one direction by an arbitrary angle with respect to the bottom part 43 or the screw axis 41A when viewed from the leading end part 40t (see FIG. 21). The cutting edge 42 in the inclined state as above is brought into a state substantially along the Y-axis (in other words, a state substantially perpendicular to the first reference surface S), when the cutting insert 40 is mounted on the insert seat 22 in which the deep seat portion 23 is inclined with respect to the first reference surface S by the angle θ as described above (see FIG. 4, FIG. 5 and the like).

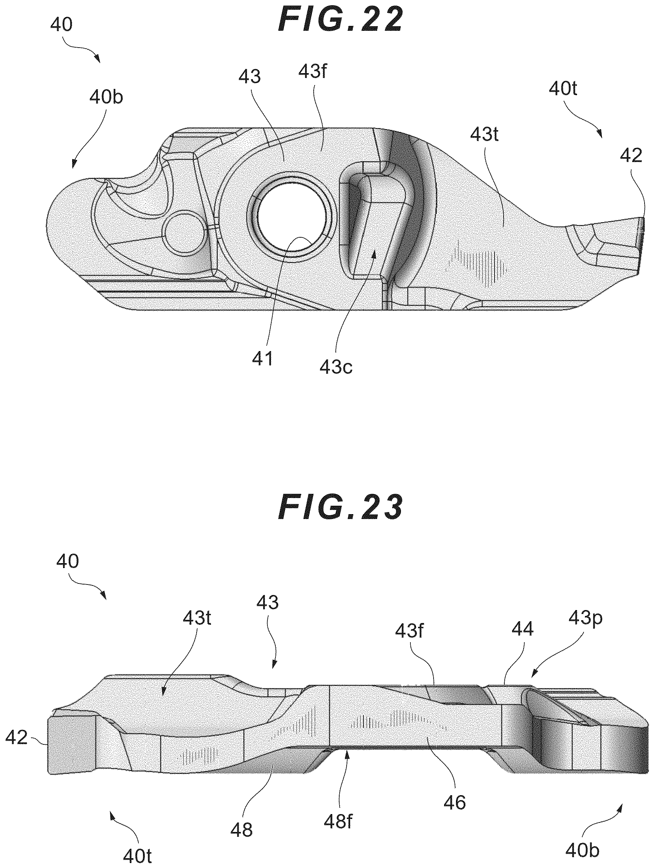

The bottom part 43 is a part on a side facing the insert seat 22 of the body 20 in the cutting insert 40 (see FIG. 22 and the like). In the bottom part 43, a part protruding to the leading end part 20t side from the body 20 (in other words, a part from the recessed part 43c, which will be described later, to the leading end part 40t, and indicated by a sign 43t) is recessed with a circular-arc shape along a cylindrical surface and has a shape particularly suitable to the grooving on an end surface (see FIG. 11A, FIG. 11B and the like). In the bottom part 43, a periphery of the screw hole 41 is a flat surface 43f (see FIG. 11A, FIG. 11B, FIG. 22 and the like). On a part closer to a base end part 40b than this flat surface 43f, a protruding portion 43p constituting one of the contact portions 44 is provided (see FIG. 11A, FIG. 11B, FIG. 23 and the like). Moreover, in the bottom part 43, the recessed part 43c is formed (see FIG. 22 and the like).

The recessed part 43c is formed by following the engagement projected part 27 of the body 20 (see FIG. 22 and the like). When the cutting insert 40 is mounted on the insert seat 22 of the body 20, the engagement projected part 27 is fitted in this recessed part 43c and is in point contact or line contact with the recessed part 43c in the leading-end side rotation suppression portion 27s (FIG. 5 and the like).

The contact portion 44 is a part formed on the bottom part 43 as a part in contact with the insert seat 22 of the body 20. In this Embodiment, the three contact portions 44 in total are constituted by two regions with respect to two receiving portions 24 having shapes divided by the counter boring 23c of the body 20 and an end-surface region of the protruding portion 43p (see FIG. 6, FIG. 8 and the like).

The top part 48 is a part located on a side opposite to the bottom part 43 and including a peripheral surface having a circular-arc shaped section (see FIG. 21 and the like). The peripheral surface constituting the top part 48 has a cylindrical shape, when the cutting insert 40 is viewed from the leading end part 40t (or on the YZ section perpendicular to the X-axis) and has a shape particularly suitable for the grooving of the end surface (see FIG. 21). In this top part 48, a part in the periphery of the screw hole 41 is in a chipped state so as to be flat (in the drawing, the flat surface formed by chipping is indicated by a sign 48f).

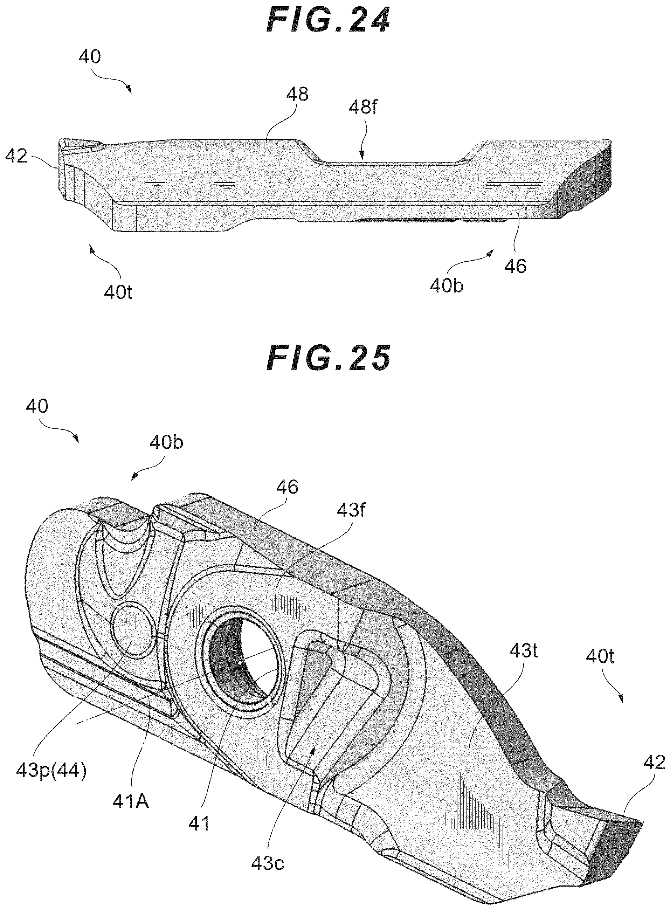

The peripheral side part 46 is a part of a side wall formed between the top part 48 and the bottom part 43 (see FIG. 23, FIG. 24 and the like). In this peripheral side part 46, the touching portion 47 in touch with the inner wall surface 26a of the body 20 is provided in a part in the base end part 40b of the cutting insert 40 (see FIG. 6 and the like). The peripheral side part 46 in this Embodiment is formed so as to be parallel to the axis 41A of the screw hole 41, but the peripheral side part 46 does not have to be parallel to the axis 41A, or an angle to the axis 41A may be changed depending on a part. It is to be noted that, in a viewpoint of suppression in a manufacturing cost, the peripheral side part 46 is preferably parallel to the axis 41A or an angle thereof is constant.

The touching portion 47 is a part in touch with the base-end side rotation suppression portions 26s provided at two spots of the inner wall surface 26a of the body 20 (see FIG. 6 and the like). The cutting insert 40 is supported by being in touch with the inner wall surface 26a of the body 20 through these touching portions 47 in the base end part 40b, while a reaction force when the external force acts from the cutting edge 42 in the machining is received by the body 20.

Moreover, in the cutting insert 40 in this Embodiment, the bottom part 43 is formed such that a position (depth) in the Y-axis direction is changed in the middle of a way from the leading end part 40t to the base end part 40b, conforming to the deep seat portion 23 and the shallow seat portion 25 of the body 20 (see FIG. 7, FIG. 25 and the like). As a result, the base end part 20b of the cutting insert 40 in this Embodiment has a shape having a part thinner than the maximum thickness in the direction along the screw axis A between the bottom part 43 and the top part 48 (see FIG. 11A, FIG. 11B and the like). A ratio of a thickness of the thin part to the maximum thickness is not particularly limited, but it is 80% or less for the cutting insert 40 in this Embodiment. The aforementioned touching portion 47 is provided on the peripheral side part 46 in the base end part 40b, which has a shape with the thin part as above (see FIG. 6).

According to the cutting tool 10 of this Embodiment explained so far, the shallow seat portion 25 is formed on the part of the base end part 20b of the body 20 so that the depth of the seat becomes shallower than the part where the receiving portion 24 in the insert seat 22 is located, and the thickness of the body 20 in the part is increased and thus, stiffness or particularly the body stiffness can be improved in the part on a side opposite to the cutting edge 42 in the cutting insert 40 without changing a size of the outer periphery of the body 20. According to this, chattering which can occur in machining such as grooving or inner-diameter machining can be suppressed.

It is to be noted that, by forming the shallow seat portion 25 with the depth of the seat being shallow without changing the size of the periphery of the body 20, the thickness of the base end part 40b of the cutting insert 40 is decreased accordingly, but in this Embodiment, by considering the point of effort, the point of fulcrum, and the operation point, such a structure is provided that the base-end side rotation suppression portion 26s and the touching portion 47 are disposed on the part of the shallow seat portion 25, and the force for supporting the cutting insert 40 is assisted by the leading-end side rotation suppression portion 27s of the engagement projected part 27 in the vicinity of the screw hole 21 as a point of fulcrum (as described above, in this Description, it expresses meaning of the support point related to rotation of the cutting insert 40 with respect to the body 20) and thus, the deflection amount of the cutting edge can be suppressed.

Moreover, as described above, in the cutting tool 10 of this Embodiment, the deep seat portion 23 when viewed from the leading end part 20t along the central axis 20x is brought into a state inclined within the predetermined range (angle θ), that is, into a state where a direction of the insert seat 22, which is an insert fastening surface, and a direction of the cutting edge 42 are given an angle by that, a support volume in the major component-force direction in the engagement projected part 27 (in the Z-axis direction in this example) is increased, and improvement of the support stiffness is made possible. Moreover, giving the angle in the direction of the insert fastening surface and in the direction of the cutting edge 42 as above in combination with forming of the insert seat 22 with the shape made shallower in steps also generates such a merit that the major component force of resistance acting in the machining (in the case of this example, the force acting in the Z-axis direction) can be supported even by a friction force on the seat surface of the insert seat 22 perpendicular to the screw axis 21A.

It is to be noted that, though the aforementioned Embodiment is an example of a preferred embodiment of the present invention, this is not limiting, but various variations can be worked within a range not departing from the gist of the present invention. For example, in the aforementioned Embodiment, such an example is shown that the parts to be seat surfaces of the deep seat portion 23 and the shallow seat portion 25 of the insert seat 22 are flat surfaces perpendicular mainly to the screw axis 21A (see FIG. 9 to FIG. 11B and the like), but this is only a preferred example. Though not particularly shown, the parts to be seat surfaces of the deep seat portion 23 and the shallow seat portion 25 may be surfaces other than flat surfaces such that the part is formed with a V-shape.

Moreover, the cutting tool 10 as that in this Embodiment is suitable for application to machining of forming a doughnut-shaped groove in an end surface of the material to be cut 100 by being mounted on a lathe and pressing the cutting edge 42 to the rotating material to be cut 100, for example, but this is only an example. In addition to the lathe tool as above, it can be extended also to a milling tool or the like such as a trepanning cutter or the like.

The present invention is preferably applied to various cutting tools including an end-surface grooving tool or a body of the cutting tool and a cutting insert.

## Claims

1. A body of a cutting tool, comprising:
an insert seat which is for mounting thereon a cutting insert, and which is provided at a leading end part of the body;
a screw hole with which a fastening screw for fastening the cutting insert mounted on the insert seat is screwed;
a deep seat portion provided at a deep part in the insert seat in an axial direction of the screw hole;
a receiving portion which is a part for receiving a contact portion at a position opposed to the contact portion formed on a bottom part facing the insert seat of the cutting insert in the deep seat portion;
a wall portion which has at least two base-end side rotation suppression portions that are formed of an inner wall surface constituting the insert seat, and that are in contact with a peripheral side part of the cutting insert, and moreover that stop rotation of the cutting insert around an axis of the screw hole; and
a shallow seat portion which is formed on a part including the base-end side rotation suppression portions in the insert seat and which has a depth shallower than the part having the receiving portion, wherein
the base-end side rotation suppression portions are positioned not to overlap the deep seat portion, when viewed along the axis of the screw hole.

2. The body of a cutting tool according to claim 1, wherein
the deep seat portion includes a surface perpendicular to the axis of the screw hole.

3. The body of a cutting tool according to claim 1 or 2, wherein
an engagement projected part having a shape for engaging with a recessed part on the bottom part of the cutting insert is formed,
preferably, wherein
the engagement projected part is formed having a shape protruding from the deep seat portion.

4. The body of a cutting tool according to claim 3, wherein
The engagement projected part is formed having a triangular shape or a trapezoidal shape on a cross section perpendicular to a central axis X extending in a longitudinal direction of the body and has a leading-end side rotation suppression portion which stops rotation of the cutting insert around the axis of the screw hole by being in touch with a part of the recessed part of the cutting insert,.
preferably, wherein
the leading-end side rotation suppression portion is formed on a leading end part of the body.

5. The body of a cutting tool according to any one of claims 1 to 4, wherein
the shallow seat portion is formed such that the shallow seat portion becomes gradually shallower while being inclined as the shallow seat portion nears the base end part of the body.

6. The body of a cutting tool according to any one of claims 1 to 5, wherein
the shallow seat portion is formed such that the shallow seat portion becomes shallower in steps as the shallow seat portion nears the base end part of the body.

7. The body of a cutting tool according to any one of claims 1 to 6, wherein
the receiving portion is provided in plurality.

8. The body of a cutting tool according to claim 7, wherein
the receiving portion is provided at least on both a region nearer to the leading end part than the screw hole and a region nearer to the base end part than the screw hole.

9. The body of a cutting tool according to any one of claims 1 to 8, wherein
a flat surface is formed on a peripheral surface on the base-end part side, and the deep seat portion is inclined with respect to a Y-axis perpendicular to the flat surface or with respect to a Z-axis perpendicular to the Y-axis and perpendicular also to a central axis X extending in a longitudinal direction of the body.

10. The body of a cutting tool according to any one of claims 1 to 9, wherein
the deep seat portion is inclined with respect to a first reference surface that is parallel to a rotating direction of a material to be cut with respect to the cutting edge during a cutting process and that includes a central axis X extending in a longitudinal direction of the body.

11. The body of a cutting tool according to claim 9 or 10, wherein
the body includes a leading-end side rotation suppression portion which stops rotation of the cutting insert around the axis of the screw hole by being in touch with a part of the recessed part of the cutting insert,
an engagement projected part having a shape for engaging with a recessed part on the bottom part of the cutting insert is formed, and
the deep seat portion is inclined in a direction in which a thickness thereof in a vertical direction increases from a leading-end side rotation suppression portion of the engagement projected part to a part located in a lower part in a vertical direction of the leading-end side rotation suppression portion in a peripheral surface of the body, when viewed from the leading end part along the central axis X.

12. A cutting insert removably mounted on the body according to any one of claims 1 to 11, the cutting insert comprising:
a cutting edge provided on a leading end part of the cutting insert; and
a screw hole through which a screw part of the fastening screw passes, wherein
an axis of the screw hole and the peripheral side part of the cutting insert are substantially parallel; and
when viewed along a central axis X extending in a longitudinal direction of the cutting insert, the cutting edge forms any angle in one direction with respect to the axis of the screw hole.

13. The cutting insert according to claim 12, wherein
the cutting edge is perpendicular to a first reference surface that is parallel to a rotating direction of a material to be cut with respect to the cutting edge during a cutting process and that includes a central axis X extending in a longitudinal direction of the body, when viewed from the leading end part along the central axis X in a state where the cutting insert is mounted on the body.

14. The cutting insert according to any one of claims 10 to 13, wherein
a top part which is located on an opposite side to the bottom part has a circular-arc shape on a cross section perpendicular to the central axis X.

15. A cutting insert removably mounted on an insert seat of a body, the cutting insert comprising:
a cutting edge which is provided on a leading end part of the cutting insert;
a screw hole through which a screw part of a fastening screw for fastening the cutting insert to the insert seat passes;
a contact portion which is formed on a bottom part facing the insert seat of the cutting insert and is in contact with the insert seat;
a top part which is located on an opposite side to the bottom part and has a circular-arc shaped cross section; and
a base end part which is thinner than a maximum thickness of the bottom part and the top part, wherein
a touching portion in touch with an inner wall surface constituting the insert seat is provided on a part in the base end part in a peripheral side part of the cutting insert.
